# EUROPEAN PATENT SPECIFICATION

(11) **EP 3 299 668 B1**
(45) Date of publication and mention of the grant of the patent: **25.11.2020**
(21) Application number: 16796185.3
(22) Date of filing: 23.03.2016
(51) Int. Cl.: F16H 57/023, B60K 17/02, B60K 17/06, F16H 57/033

(54) **TRANSMISSION**
GETRIEBE
BOÎTE DE VITESSES

(30) Priority: 18.05.2015 JP 2015101437; 18.05.2015 JP 2015101438
(43) Date of publication of application: 28.03.2018
(73) Proprietor: Yanmar Co., Ltd., Osaka-shi, Osaka 530-8311 (JP)
(72) Inventor: YOSHIOKA, Terunobu, Osaka-shi Osaka 530-8311 (JP)
(74) Representative: Jostarndt Patentanwalts-AG
(86) International application number: PCT/JP2016/059188
(87) International publication number: WO 2016/185791

(56) References cited:
- JP-A- H05 178 103
- JP-A- 2002 127 766
- JP-A- 2002 127 766
- JP-A- 2008 095 751
- JP-A- 2013 136 380
- US-A1- 2005 204 843

## Description

### Technical Field

The present invention relates to a transmission.

### Background Art

Traditionally, tractors have been known as typical working vehicles (see Patent Literature 1; hereinafter PTL 1). Each tractor has a transmission that enables changing of the traveling speed. The transmission has a hydraulic unit which operates with a working fluid (see Patent Literature 2; hereinafter PTL 2). PTL 3 discloses a transmission for a working vehicle, in particular for a tractor, according to the preamble of claim 1. However, this document does not disclose that the transmission is capable of selecting a continuously variable transmission as the hydraulic unit.

There are various specifications for transmissions. Examples of such include a hydraulic speed-changing specification and a mechanical speed-changing specification. However, each specification requires a use of a housing suitable for the type, which leads to a problem of an increasing cost. For this reason, there has been a demand for a transmission convertible to various specifications, while ensuring the compatibility of the housing.

The transmission additionally includes an input shaft which transmits rotary power to the hydraulic unit, and an output shaft which transmits rotary power from the hydraulic unit. Due to the rotations of the input shaft and the output shaft, the hydraulic unit could largely vibrate in a traditional transmission. Further, there is also a problem of an inevitable increase in the size of a housing for accommodating these.

### Citation List

### Patent Literature

PTL 1: Japanese Patent Application Laid-Open No. 2013-136380
PTL 2: Japanese Patent Application Laid-Open No. 2008-202721
PTL 3: US 2005/204842 A1

### Summary of Invention

### Technical Problem

It is an object of the present invention to provide a transmission convertible to various specifications while ensuring compatibility of housing. It is further an object of the present invention to provide a transmission that can restrain vibration of a hydraulic unit, and that can downsize the housing.

### Solution to Problem

A first aspect of the present invention is a transmission as defined by the features of claim 1 including:
a hydraulic unit which operates with a working fluid;
an input shaft configured to transmit rotary power to the hydraulic unit;
an output shaft configured to transmit rotary power from the hydraulic unit; and
a housing configured to accommodate the hydraulic unit, the input shaft, and the output shaft, wherein
the transmission is capable of selecting a continuously variable transmission or a connection/disconnection device as the hydraulic unit, wherein
the input shaft and the output shaft are structured into a double-shaft structure,
a unit holder fixed to the housing while holding the hydraulic unit is provided, and
to the unit holder, a bearing for the input shaft or the output shaft is provided.

A second aspect of the present invention may be the transmission related to the first aspect, wherein
when the hydraulic unit is the continuously variable transmission,
the housing is capable of accommodating an advancing/backing-switching device and a sub-speed changer which are moveable via the continuously variable transmission.

A third aspect of the present invention may be the transmission related to the first aspect, wherein
when the hydraulic unit is the connection/disconnection device,
the housing is capable of accommodating a main speed changer and the sub-speed changer which are moveable through the connection/disconnection device.

A fourth aspect of the present invention may be the transmission related to the second or the third aspect, wherein
the housing has a main block, a center block, and a front cover which are common for a case where the hydraulic unit is the continuously variable transmission and for a case where the hydraulic unit is the connection/disconnection device.

A fifth aspect of the present invention may be the transmission related to the fourth aspect, including
an advancing/backing-switching mechanism, wherein
to the unit holder, a bearing for a countershaft constituting the advancing/backing-switching mechanism is provided.

A sixth aspect of the present invention may be the transmission related to the fourth aspect, including
an advancing/backing-switching mechanism, wherein
to the unit holder, a bearing of a control rod structuring the advancing/backing-switching mechanism is provided.

A seventh aspect of the present invention may be the transmission related to any one of the fourth to sixth aspects, wherein
a hole provided to the unit holder serves as a passage for guiding a working fluid to the hydraulic unit.

### Advantageous Effects of Invention

The following effects are brought about as effects of the present invention.

With the first aspect of the present invention, the transmission is capable of selecting a continuously variable transmission or a connection/disconnection device as the hydraulic unit. This way, the transmission can be changed into various specifications, while ensuring the compatibility of the housing. Further, with the fifth aspect of the present invention, in the transmission, the input shaft and the output shaft have a double shaft structure. Further, a unit holder fixed to the housing while holding the hydraulic unit is provided. Further, to the unit holder, a bearing for the input shaft or the output shaft is provided. This way, in the transmission, the vibration of the hydraulic unit can be restrained, because the unit holder holds the hydraulic unit. Further, in the transmission, the input shaft, the output shaft, and the unit holder are made compact, which enables downsizing of the housing.

With the second aspect of the present invention, when the hydraulic unit is the continuously variable transmission, the housing is capable of accommodating an advancing/backing-switching device and a sub-speed changer which are moveable via the continuously variable transmission. This way, the transmission can achieve a hydraulic speed-changing specification, while ensuring the compatibility of the housing.

With the third aspect of the present invention, when the hydraulic unit is the connection/disconnection device, the housing is capable of accommodating a main speed changer and a sub-speed changer which are moveable via the connection/disconnection device. This way, the transmission can achieve a mechanical speed-changing specification, while ensuring the compatibility of the housing.

With the fourth aspect of the present invention, the housing has a main block, a center block, and a front cover which arc common for a case where the hydraulic unit is the continuously variable transmission and for a case where the hydraulic unit is the connection/disconnection device. Thus, the transmission can achieve cost reduction, whether it is the hydraulic speed-changing specification or the mechanical speed-changing specification.

With the fifth aspect of the present invention, the transmission includes the advancing/backing-switching mechanism. Further, to the unit holder, a bearing for a countershaft constituting the advancing/backing-switching mechanism is provided. This way, in the transmission, the unit holder and the countershaft are made compact, which enables downsizing of the housing.

With the sixth aspect of the present invention, the transmission includes the advancing/backing-switching mechanism. Further, to the unit holder, a bearing for a control rod constituting the advancing/backing-switching mechanism is provided. This way, in the transmission, the unit holder and the control rod are made compact, which enables downsizing of the housing.

With the seventh aspect of the present invention, in the transmission, a hole provided to the unit holder serves as a passage for guiding a working fluid to the hydraulic unit. This way, in the transmission, the internal structure with a reduced number of its components is made compact, which enables downsizing of the housing.

### Brief Description of Drawings

[FIG. 1] A diagram showing a tractor.
[FIG. 2] A diagram showing a power train system of a hydraulic speed-changing specification.
[FIG. 3] A diagram showing a transmission of the hydraulic speed-changing specification.
[FIG.4] A diagram showing a structure of the transmission of the hydraulic speed-changing specification.
[FIG. 5] FIG. 4 viewed in the direction of arrow F.
[FIG. 6] FIG. 4 viewed in the direction of arrow R.
[FIG. 7] FIG. 4 viewed in the direction of arrow L.
[FIG. 8] A diagram showing a power train system of a mechanical speed-changing specification.
[FIG. 9] A diagram showing a transmission of the mechanical speed-changing specification.
[FIG. 10] A diagram showing a structure of the transmission of the mechanical speed-changing specification.
[FIG. 11] FIG. 10 viewed in the direction of arrow F.
[FIG. 12] FIG. 10 viewed in the direction of arrow R.
[FIG. 13] FIG. 10 viewed in the direction of arrow L.
[FIG. 14] A diagram showing an advancing/backing-switching mechanism.
[FIG. 15] A diagram showing a structure of a transmission housing.
[FIG. 16] A diagram showing a main block.
[FIG. 17] A projection view showing the details of the main block.
[FIG. 18] A diagram showing a center block.
[FIG. 19] A projection view showing the details of the center block.
[FIG. 20] A diagram showing a front cover.
[FIG. 21] A projection view showing the details of the front cover.
[FIG.22] A diagram showing a rear cover of the hydraulic speed-changing specification.
[FIG.23] A projection view showing the details of the rear cover of the hydraulic speed-changing specification.
[FIG.24] A diagram showing a rear cover of the mechanical speed-changing specification.
[FIG.25] A projection view showing the details of the rear cover of the mechanical speed-changing specification.
[FIG. 26] A diagram showing a unit holder.
[FIG. 27] A projection view showing the details of the unit holder.
[FIG. 28] A diagram showing a state where the unit holder holds a main clutch.
[FIG. 29] A diagram showing a state where the unit holder holds a countershaft.
[FIG. 30] A diagram showing a state where the unit holder holds a control rod.
[FIG. 31] A diagram showing a passage guiding a working fluid to a clutch mechanism of the main clutch.
[FIG. 32] A diagram showing a passage guiding a working fluid to a brake mechanism of the main clutch.

### Description of Embodiment

The technical idea of the present invention is applicable to various working vehicles. The following however deals with a tractor which is a typical working vehicle.

First, a tractor 100 is briefly described.

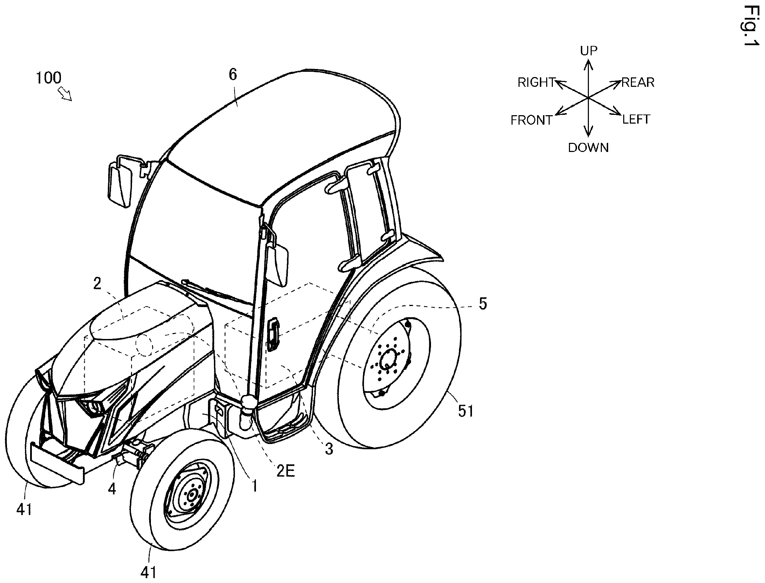

FIG. 1 shows a tractor 100. In the figure, the front-rear directions, the left and right directions, as well as the up and down directions of the tractor 100 are indicated.

The tractor 100 is mainly structured by a frame 1, an engine 2, a transmission 3, a front axle 4, a rear axle 5. Further, the tractor 100 has a cabin 6. The inside of the cabin 6 is an operation room, and a driver seat, accelerator pedal, a shift lever, and the like are arranged.

The frame 1 is a skeleton of the front portion of the tractor 100. The frame 1 constitutes a chassis of the tractor 100, along with the transmission 3 and the rear axle 5. The engine 2 described hereinbelow is supported by the frame 1.

The engine 2 converts a thermal energy obtained by combusting a fuel into kinetic energy. In other words, the engine 2 generates rotary power by combusting the fuel. It should be noted that the engine 2 is connected to an engine control device (not shown). When an operator operates the accelerator pedal and the like, the engine control device changes the operational state of the engine 2 according to the operation. Further, the engine 2 is provided with an exhaust gas purification device 2E. The exhaust gas purification device 2E oxidizes particles, carbon monoxide, hydrocarbon, and the like contained in the exhaust gas.

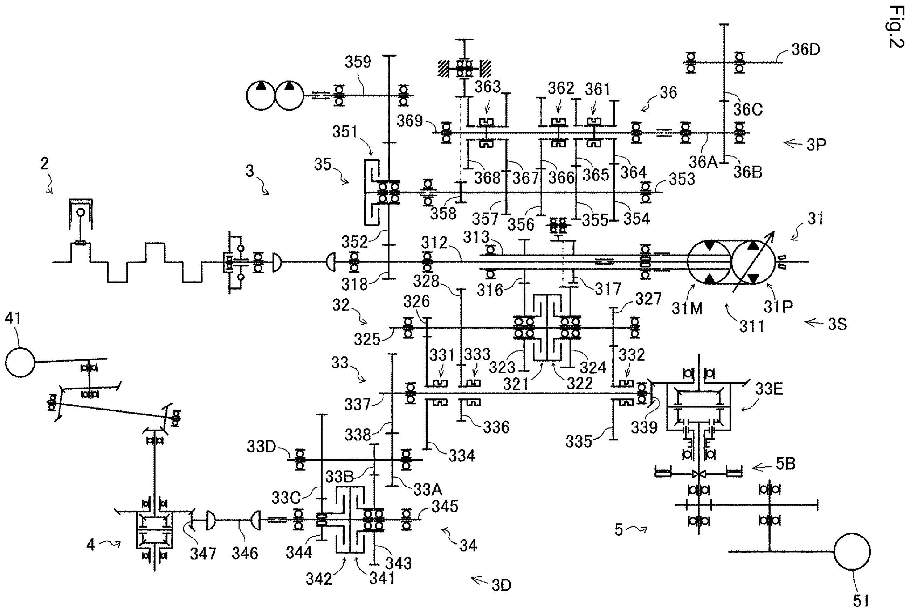

The transmission 3 transmits rotary power of the engine 2 to the front axle 4 or the rear axle 5. To the transmission 3, the rotary power of the engine 2 is input via a connecting clutch. The transmission 3 is provided with a speed change mechanism 3S (see FIG. 2). When an operator operates a shift lever and the like, the speed change mechanism 3S changes the traveling speed of the tractor 100 according to the operation. Further, the transmission 3 is provided with a front-wheel drive mechanism 3D or a work-machine drive mechanism 3P (see FIG. 2). When an operator operates a select switch and the like, the front-wheel drive mechanism 3D changes the driving mode of the front wheels 41 according to the operation. When an operator operates a power switch and the like, the work-machine drive mechanism 3P changes the operation mode of the work machine (not shown, e.g., a rotary and the like) according to the operation.

The front axle 4 transmits rotary power of the engine 2 to the front wheels 41. To the front axle 4, the rotary power of the engine 2 is input via the transmission 3. It should be noted that the front axle 4 is provided in parallel with a steering gear device (not shown). When an operator operates a steering wheel and the like, the steering gear device changes the steering angle of the front wheels 41 according to the operation.

The rear axle 5 transmits rotary power of the engine 2 to rear wheels 51. To the rear axle 5, the rotary power of the engine 2 is input via the transmission 3. The rear axle 5 is provided with a brake mechanism 5B (see FIG. 2). When an operator operates a brake pedal, the brake mechanism 5B slows down or stops the rotation of the rear wheels 51 according to the operation. Further, when an operator operates a steering wheel, the brake mechanism 5B can slow down or stop the rotation of one of the rear wheels 51 according to the operation (this function is referred to as "autobrake function").

Next, the following describes a power train system, where the tractor 100 is a hydraulic speed-changing specification.

The power train system of the tractor 100 is mainly constituted by the transmission 3, the front axle 4, and the rear axle 5. In the following, the structure of the transmission 3 is focused.

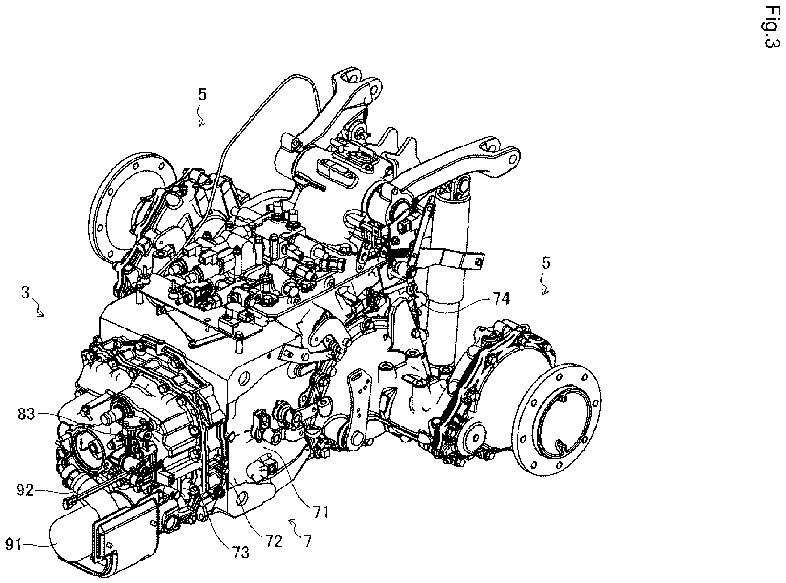

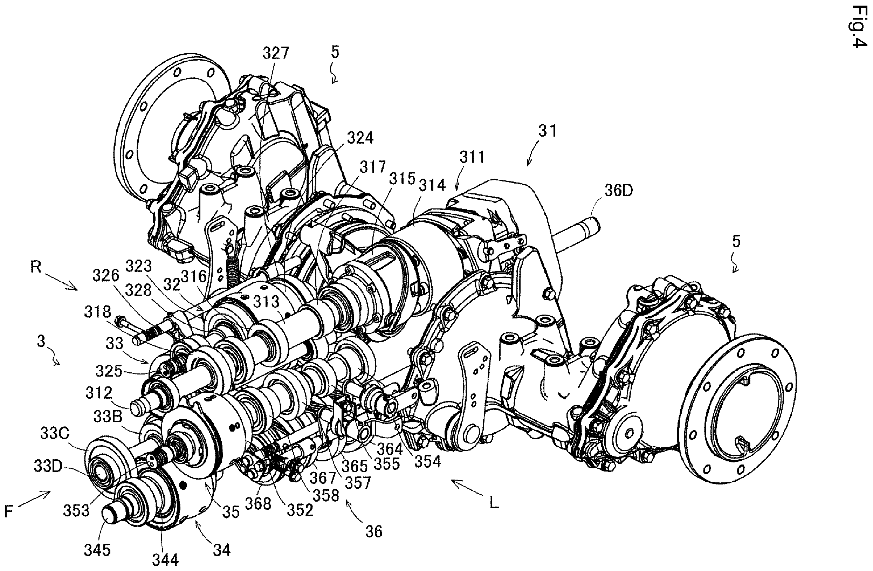

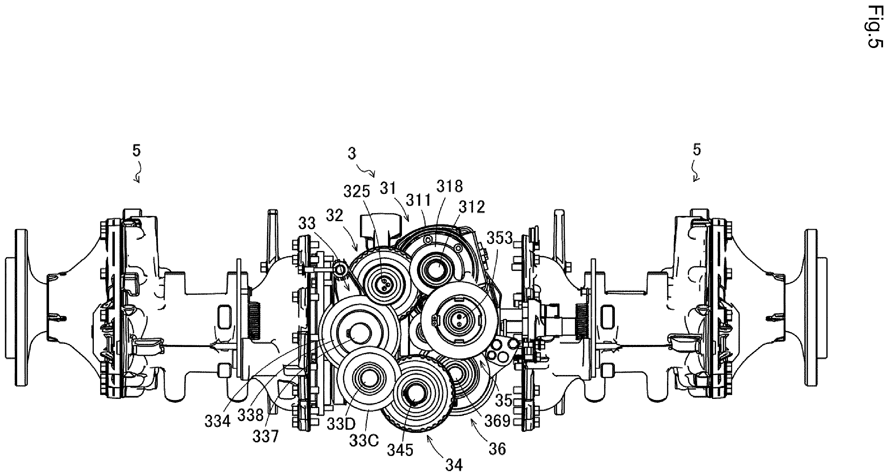

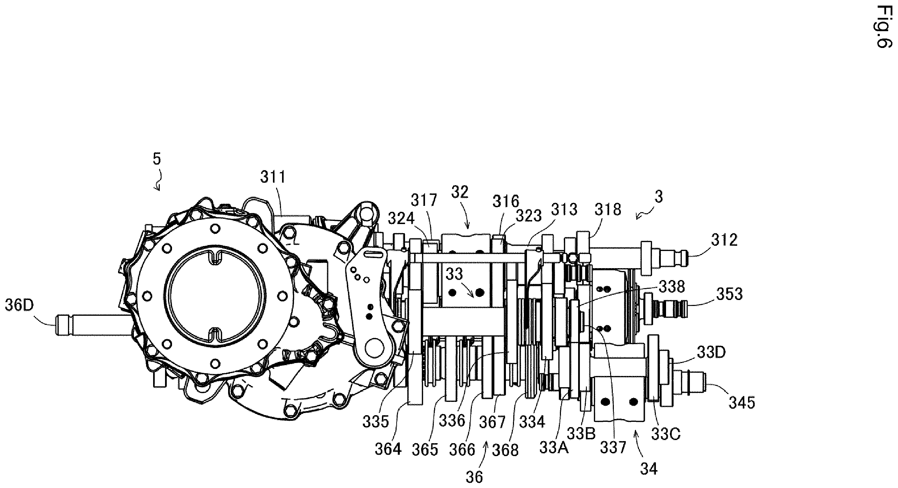

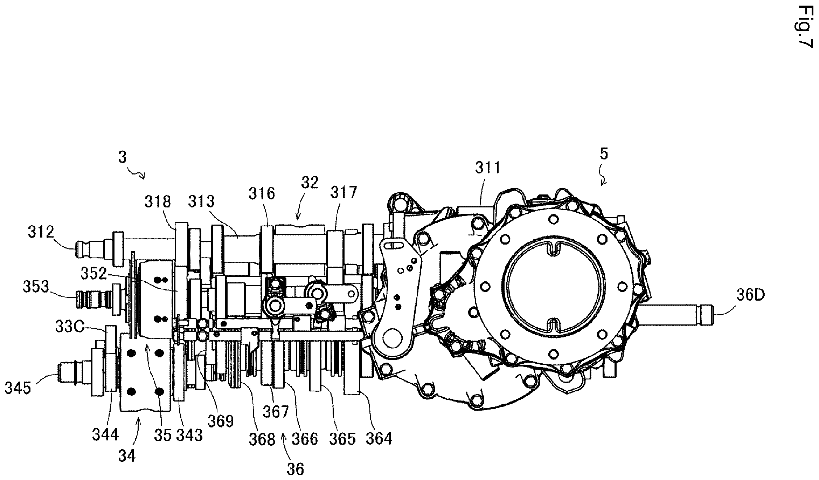

FIG. 2 is a diagram showing a power train system of a hydraulic speed-changing specification. FIG. 3 is a diagram showing a transmission 3 of the hydraulic speed-changing specification. FIG.4 is a diagram showing a structure of the transmission 3 of the hydraulic speed-changing specification. FIG. 5 shows FIG. 4 viewed in the direction of arrow F, FIG. 6 shows FIG. 4 viewed in the direction of arrow R, and FIG. 7 shows FIG. 4 viewed in the direction of arrow L.

The transmission 3 has the hydraulic unit which operates with a working fluid. An example is a continuously variable transmission (HMT) 311 constituting a main speed changer 31.

The main speed changer 31 can change a ratio of the rotational speeds of the input shaft 312 and the output shaft 313 in a stepless manner. To the continuously variable transmission 311, the input shaft 312 and the output shaft 313 are connected. The input shaft 312 is connected to a rotatably supported plunger block 314. The plunger block 314 feeds out a high pressure working fluid, and functions as a hydraulic pump 31P. The output shaft 313 is connected to a rotatably supported motor case 315. The motor case 315 receives the high pressure working fluid to rotate, and functions as a hydraulic motor 31M. It should be noted that, to the output shaft 313, an advance-driving gear 316 and a back-driving gear 317 are attached. The advance-driving gear 316 and the back-driving gear 317 transmit rotary power to the advancing/backing-switching device 32.

The advancing/backing-switching device 32 can transmit rotary power via any of an advancing clutch 321 and a backing clutch 322. The advancing clutch 321 has an advance-driven gear 323 which engages with the advance-driving gear 316. The advancing clutch 321, when being operated, transmits rotary power of the output shaft 313 to a center shaft 325. The backing clutch 322 has a back-driven gear 324 which engages with the back-driving gear 316 via a reverse gear. The backing clutch 322, when being operated, transmits rotary power of the output shaft 313 to a center shaft 325. It should be noted that, to the center shaft 325, a super-low speed drive gear 326, a first-speed drive gear 327, and a second-speed drive gear 328 are attached. The super-low speed drive gear 326, the first-speed drive gear 327, and the second-speed drive gear 328 transmit rotary power to the sub-spccd changer 33.

The sub-speed changer 33 can change in multiple steps the ratio of rotational speeds of the center shaft 325 and a center shaft 337. A super-low speed dog unit 331 is adjacent to a super-low speed driven gear 334 which engages with the super-low speed drive gear 326. The super-low speed dog unit 331, when being operated, transmits rotary power of the center shaft 325 to the center shaft 337. A first-speed dog unit 332 is adjacent to a first-speed driven gear 335 which engages with the first-speed drive gear 327. The first-speed dog unit 332, when being operated, transmits the rotary power of the center shaft 325 to the center shaft 337. A second-speed dog unit 333 is adjacent to a second-speed driven gear 336 which engages with the second-speed drive gear 328. The second-speed dog unit 333, when being operated, transmits rotary power of the center shaft 325 to the center shaft 337. It should be noted that, to the center shaft 337, a front drive gear 338 and a rear pinion gear 339 are attached. The front drive gear 338 transmits rotary power to a front-wheel drive switching device 34 via a countershaft 33D having a front driven gear 33A, a constant velocity drive gear 33B, an acceleration drive gear 33C. The rear pinion gear 339 transmits rotary power to the rear axle 5 via a differential gear unit 33E.

The front-wheel drive switching device 34 can transmit rotary power via any of the constant velocity clutch 341 and the acceleration clutch 342. The constant velocity clutch 341 has a constant velocity driven gear 343 which engages with the constant velocity drive gear 33B. The constant velocity clutch 341, when being operated, transmits rotary power of the countershaft 33D to a center shaft 345. The acceleration clutch 342 has an acceleration driven gear 344 which engages with the acceleration drive gear 33C. The acceleration clutch 342, when being operated, transmits rotary power of the countershaft 33D to a center shaft 345. It should be noted that, to the center shaft 345, a propeller shaft 346 is attached. Further, to the propeller shaft 346, a front pinion gear 347 is attached. The front pinion gear 347 transmits rotary power to the front axle 4.

With the above-described structure, the transmission 3 is capable of changing the traveling speed (traveling speed including stopping) of the tractor 100. Further, the transmission 3 is capable of changing the traveling direction (advancing or backing) of the tractor 100. Further, the transmission 3 is capable of changing the driving mode (constant velocity four-wheel drive or acceleration four-wheel drive, or non-driving) of the front wheels 41.

The work-machine drive switching device 35 can transmit rotary power via a PTO clutch 351. The PTO clutch 351 has a driven gear 352 which engages with a drive gear 318. The PTO clutch 351, when being operated, transmits rotary power of the input shaft 312 to the center shaft 353. It should be noted that, to the center shaft 353, a first-speed drive gear 354, a sccond-spccd drive gear 355, a third-speed drive gear 356, a fourth-speed drive gear 357 and a reverse drive gear 358 are attached. The first-speed drive gear 354, the second-speed drive gear 355, the third-speed drive gear 356, the fourth-speed drive gear 357, and the reverse drive gear 358 transmit rotary power to the work-machine speed changer 36.

The work-machine speed changer 36 can change in multiple steps the ratio of rotational speeds of the center shaft 353 and a center shaft 369. A first dog unit 361 is arranged between a first-speed driven gear 364 and a second-speed driven gear 365. The first dog unit 361, when its sleeve slides in one direction, transmits the rotary power of the center shaft 353 to the center shaft 369 via the first-speed drive gear 354 and the first-speed driven gear 364. Further, the first dog unit 361, when its sleeve slides in another direction, transmits the rotary power of the center shaft 353 to the center shaft 369 via the second-speed drive gear 355 and the second-speed driven gear 365. A second dog unit 362 is adjacent to a third-speed driven gear 366. The second dog unit 362, when its sleeve slides in one direction, transmits the rotary power of the center shaft 353 to the center shaft 369 via the third-speed drive gear 356 and the third-speed driven gear 366. A third dog unit 363 is arranged between a fourth-speed driven gear 367 and a reverse driven gear 368. The third dog unit 363, when its sleeve slides in one direction, transmits the rotary power of the center shaft 353 to the center shaft 369 via the fourth-speed drive gear 357 and the fourth-speed driven gear 367. Further, the third dog unit 363, when its sleeve slides in another direction, transmits the rotary power of the center shaft 353 to the center shaft 369 via the reverse drive gear 358, the reverse gear, and the reverse driven gear 368. It should be noted that, to the center shaft 369, a drive shaft 36A is attached. Further, to the drive shaft 36A, a PTO drive gear 36B is attached. The PTO drive gear 36B transmits rotary power to the work-machine via a PTO shaft 36D having a PTO driven gear 36C.

With the above-described structure, the transmission 3 is capable of changing the operation speed (operation speed including stopping) of the work-machine. Further, the transmission 3 is capable of changing the operation direction (normal rotation or reverse rotation) of the work-machine.

Next, the following describes a power train system, where the tractor 100 is a mechanical speed-changing specification.

The power train system of the tractor 100 is mainly constituted by the transmission 3, the front axle 4, and the rear axle 5. In the following, the structure of the transmission 3 is focused.

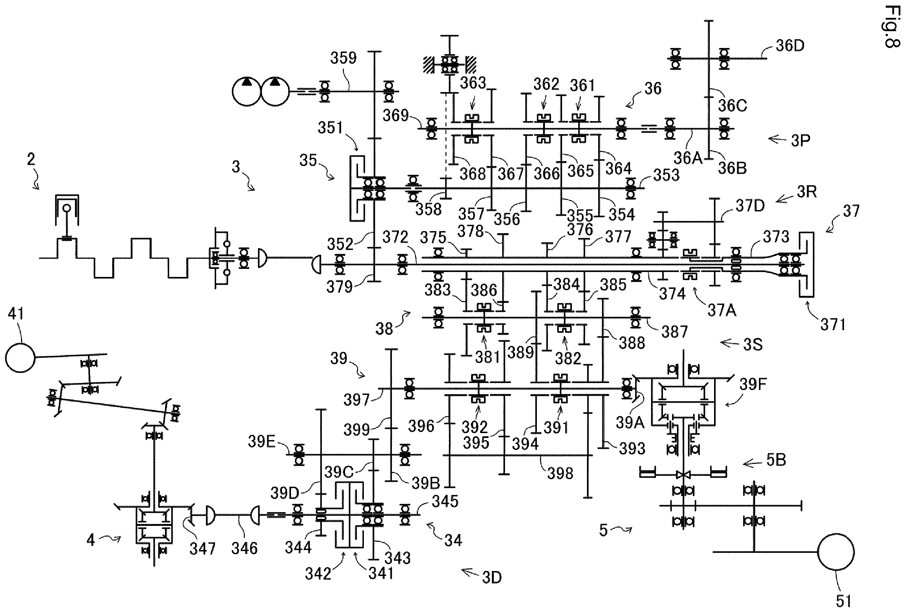

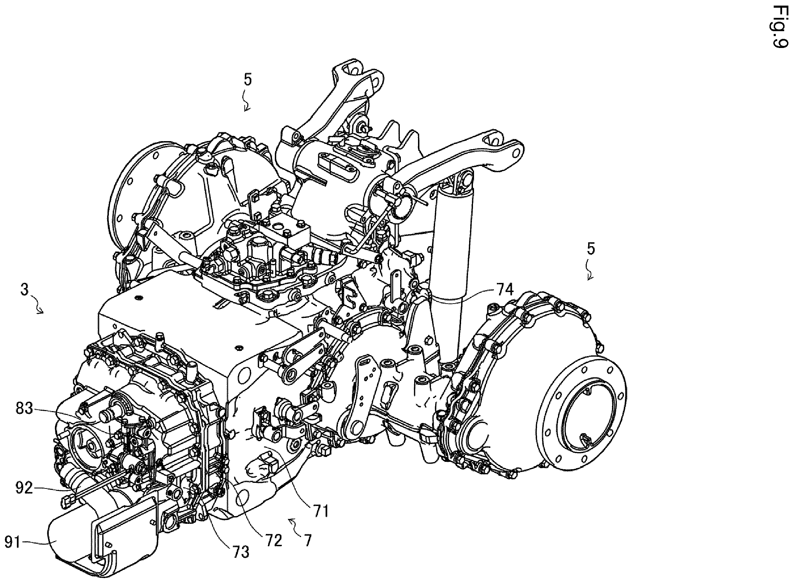

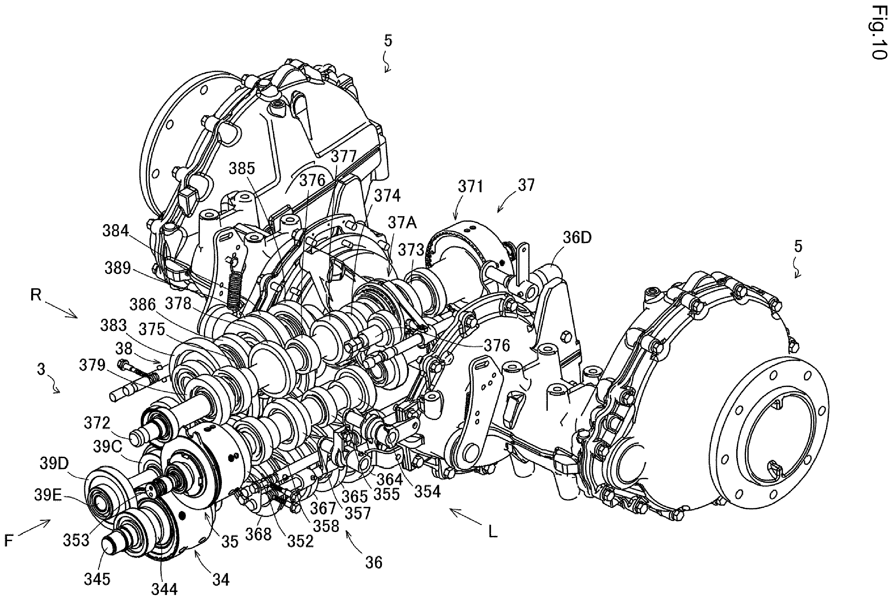

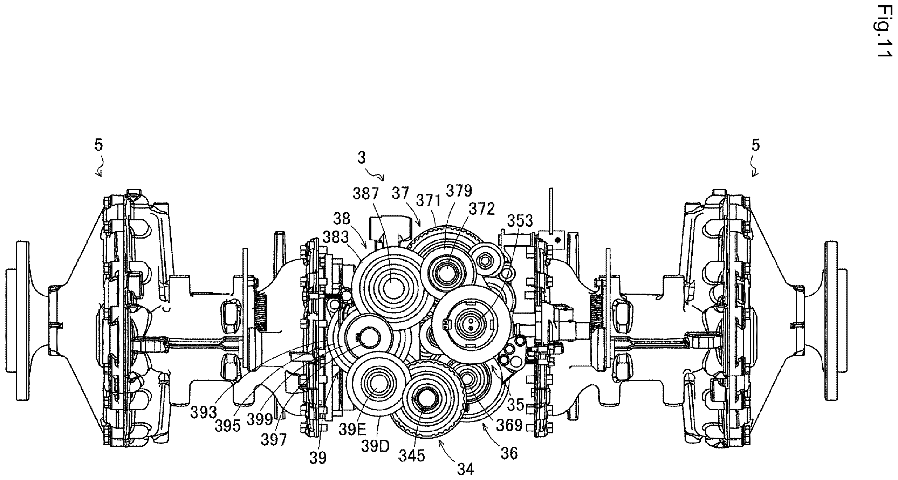

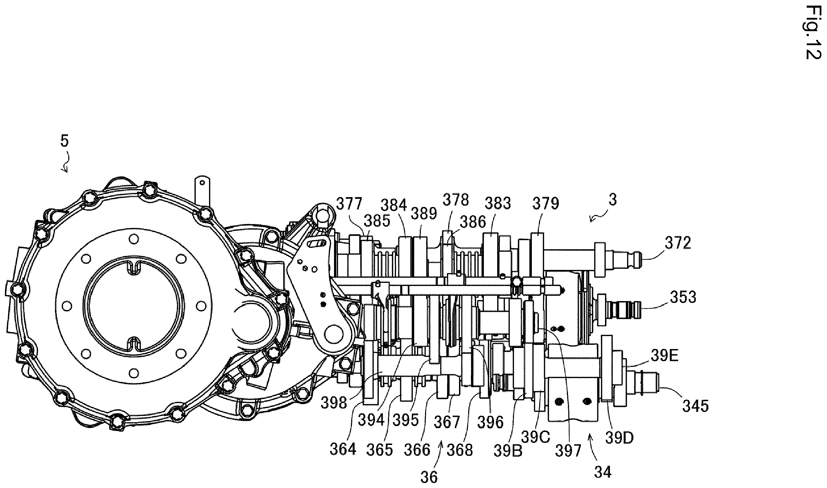

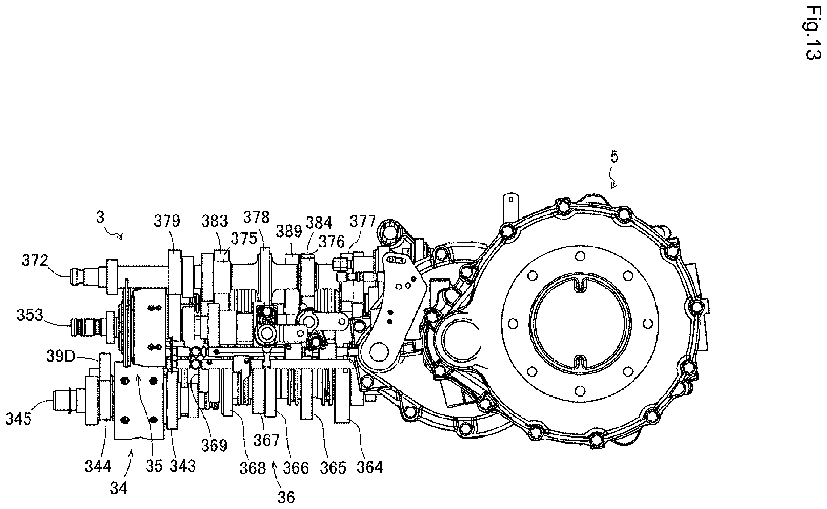

FIG. 8 is a diagram showing a power train system of a mechanical speed-changing specification. FIG. 9 is a diagram showing a transmission 3 of the mechanical speed-changing specification. FIG. 10 is a diagram showing a structure of the transmission 3 of the mechanical speed-changing specification. FIG. 11 shows FIG. 10 viewed in a direction of arrow F, FIG. 12 shows FIG. 10 viewed in a direction of arrow R, and FIG. 13 shows FIG. 10 viewed in a direction of arrow L.

The transmission 3 has the hydraulic unit which operates with a working fluid. An example is a connection/disconnection device (hereinafter, "main clutch 371") and the like constituting a power transmission switching device 37.

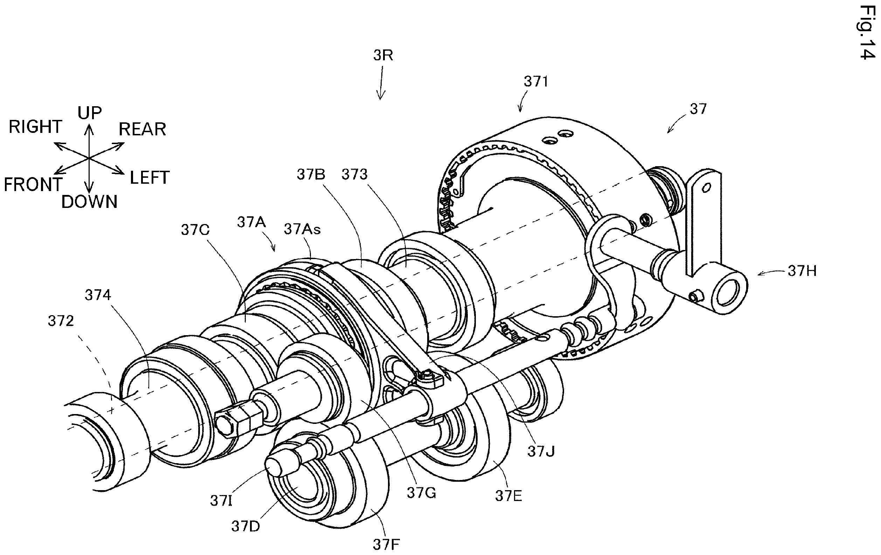

The power transmission switching device 37 can transmit rotary power via the main clutch 371. To the main clutch 371, an input shaft 372 and an output shaft 373 are connected. The main clutch 371, when being operated, transmits rotary power of the input shaft 372 to the output shaft 373. It should be noted that, to the output shaft 373, a synchro unit 37A is attached. The synchro unit 37A, when its sleeve 37As (see FIG. 14) slides in one direction, transmits rotary power of the output shaft 373 to a gear shaft 374 (causes normal rotation). Further, the synchro unit 37A, when its sleeve 37As slides in another direction, transmits rotary power of the output shaft 373 to a gear shaft 374 (causes reverse rotation) via a countershaft 37D. To the gear shaft 374, a super-low speed drive gear 375, a first-speed drive gear 376, a second-speed drive gear 377, and a third-speed drive gear 378 are attached. The super-low speed drive gear 375, the first-speed drive gear 376, the second-speed drive gear 377, and the third-speed drive gear 378 transmit rotary power to a main speed changer 38. It should be noted that the synchro unit 37A and the countershaft 37D constitutes an advancing/backing-switching mechanism 3R. The advancing/backing-switching mechanism 3R will be described later.

The main speed changer 38 can change in multiple steps the ratio of rotational speeds of the gear shaft 374 and a center shaft 387. A first dog unit 381 is arranged between a super-low speed driven gear 383 and a third-speed driven gear 386. The first dog unit 381, when its sleeve slides in one direction, transmits the rotary power of the gear shaft 374 to the center shaft 387 via the super-low speed drive gear 375 and the super-low speed driven gear 383. Further, the first dog unit 381, when its sleeve slides in another direction, transmits the rotary power of the gear shaft 374 to the center shaft 387 via the third-speed drive gear 378 and the third-speed driven gear 386. A second dog unit 382 is arranged between a first-speed driven gear 384 and a second-speed driven gear 385. The second dog unit 382, when its sleeve slides in one direction, transmits the rotary power of the gear shaft 374 to the center shaft 387 via the first-speed drive gear 376 and the first-speed driven gear 384. Further, the second dog unit 382, when its sleeve slides in another direction, transmits the rotary power of the gear shaft 374 to the center shaft 387 via the second-speed drive gear 377 and the second-speed driven gear 385. It should be noted that, to the center shaft 387, a first drive gear 388 and a second drive gear 389 arc attached. The first drive gear 388 and the second drive gear 389 transmit rotary power to the sub-speed changer 39.

The sub-speed changer 39 can change in multiple steps the ratio of rotational speeds of the center shaft 387 and a center shaft 397. A first dog unit 391 is arranged between a first driven gear 393 and a second driven gear 394. The first dog unit 391, when its sleeve slides in one direction, transmits the rotary power of the center shaft 387 to the center shaft 397 via the first drive gear 388 and the first driven gear 393. Further, the first dog unit 391, when its sleeve slides in another direction, transmits the rotary power of the center shaft 387 to the center shaft 397 via the second drive gear 389 and the second driven gear 394. A second dog unit 392 is arranged between a third driven gear 395 and a fourth driven gear 396. The second dog unit 392, when its sleeve slides in one direction, transmits the rotary power of the center shaft 387 to the center shaft 397 via the first drive gear 388 and the first driven gear 393, as well as the countershaft 398 and the third driven gear 395. Further, the second dog unit 392, when its sleeve slides in another direction, transmits the rotary power of the center shaft 387 to the center shaft 397 via the first drive gear 388 and the first driven gear 393, as well as the countershaft 398 and the fourth driven gear 396. It should be noted that, to the center shaft 397, a front drive gear 399 and a rear pinion gear 39A are attached. The front drive gear 399 transmits rotary power to a front-wheel drive switching device 34 via a countershaft 39E having a front driven gear 39B, a constant velocity drive gear 39C, an acceleration drive gear 39D. The rear pinion gear 39A transmits rotary power to the rear axle 5 via a differential gear unit 39F.

The front-wheel drive switching device 34 can transmit rotary power via any of the constant velocity clutch 341 and the acceleration clutch 342. The constant velocity clutch 341 has a constant velocity driven gear 343 which engages with the constant velocity drive gear 39C. The constant velocity clutch 341, when being operated, transmits rotary power of the countershaft 39E to a center shaft 345. The acceleration clutch 342 has an acceleration driven gear 344 which engages with the acceleration drive gear 39D. The acceleration clutch 342, when being operated, transmits rotary power of the countershaft 39E to a center shaft 345. It should be noted that, to the center shaft 345, a propeller shaft 346 is attached. Further, to the propeller shaft 346, a front pinion gear 347 is attached. The front pinion gear 347 transmits rotary power to the front axle 4.

With the above-described structure, the transmission 3 is capable of changing the traveling speed (traveling speed including stopping) of the tractor 100. Further, the transmission 3 is capable of changing the traveling direction (advancing or backing) of the tractor 100. Further, the transmission 3 is capable of changing the driving mode (constant velocity four-wheel drive or acceleration four-wheel drive, or non-driving) of the front wheels 41.

The work-machine drive switching device 35 can transmit rotary power via a PTO clutch 351. The PTO clutch 351 has a driven gear 352 which engages with a drive gear 379. The PTO clutch 351, when being operated, transmits rotary power of the input shaft 372 to the center shaft 353. It should be noted that, to the center shaft 353, a first-speed drive gear 354, a second-speed drive gear 355, a third-speed drive gear 356, a fourth-speed drive gear 357 and a reverse drive gear 358 are attached. The first-speed drive gear 354, the second-speed drive gear 355, the third-speed drive gear 356, the fourth-speed drive gear 357, and the reverse drive gear 358 transmit rotary power to the work-machine speed changer 36.

The work-machine speed changer 36 can change in multiple steps the ratio of rotational speeds of the center shaft 353 and a center shaft 369. A first dog unit 361 is arranged between a first-speed driven gear 364 and a second-speed driven gear 365. The first dog unit 361, when its sleeve slides in one direction, transmits the rotary power of the center shaft 353 to the center shaft 369 via the first-speed drive gear 354 and the first-speed driven gear 364. Further, the first dog unit 361, when its sleeve slides in another direction, transmits the rotary power of the center shaft 353 to the center shaft 369 via the second-speed drive gear 355 and the second-speed driven gear 365. A second dog unit 362 is adjacent to a third-speed driven gear 366. The second dog unit 362, when its sleeve slides in one direction, transmits the rotary power of the center shaft 353 to the center shaft 369 via the third-speed drive gear 356 and the third-speed driven gear 366. A third dog unit 363 is arranged between a fourth-speed driven gear 367 and a reverse driven gear 368. The third dog unit 363, when its sleeve slides in one direction, transmits the rotary power of the center shaft 353 to the center shaft 369 via the fourth-speed drive gear 357 and the fourth-speed driven gear 367. Further, the third dog unit 363, when its sleeve slides in another direction, transmits the rotary power of the center shaft 353 to the center shaft 369 via the reverse drive gear 358, the reverse gear, and the reverse driven gear 368. It should be noted that, to the center shaft 369, a drive shaft 36A is attached. Further, to the drive shaft 36A, a PTO drive gear 36B is attached. The PTO drive gear 36B transmits rotary power to the work-machine via a PTO shaft 36D having a PTO driven gear 36C.

With the above-described structure, the transmission 3 is capable of changing the operation speed (operation speed including stopping) of the work-machine. Further, the transmission 3 is capable of changing the operation direction (normal rotation or reverse rotation) of the work-machine.

The following details the advancing/backing-switching mechanism 3R.

FIG. 14 shows an advancing/backing-switching mechanism 3R. In the figure, the front-rear directions, the left and right directions, as well as the up and down directions of the tractor 100 are indicated.

The advancing/backing-switching mechanism 3R can change the rotational direction of the gear shaft 374. A synchro unit 37A is arranged between an output gear 37B and an input gear 37C. The countershaft 37D has a driven gear 37E and a drive gear 37F, and is arranged in parallel to the gear shaft 374. The synchro unit 37A, when its sleeve 37As slides in one direction, directly transmits rotary power of the output shaft 373 to a gear shaft 374 (causes normal rotation). Further, the synchro unit 37A, when its sleeve 37As slides in another direction, transmits rotary power of the output shaft 373 to the countershaft 37D via the output gear 37B and the driven gear 37E. Then, rotary power of the countershaft 37D is transmitted to the gear shaft 374 (causes reverse rotation) via the drive gear 37F, a reverse gear 37G, and the input gear 37C. In other words, rotary power of the output shaft 373 is indirectly transmitted to the gear shaft 374.

The advancing/backing-switching mechanism 3R additionally includes a shift unit 37H. The shift unit 37H is arranged nearby the output shaft 373 and the gear shaft 374. A shift rod 37I is arranged in parallel to the gear shaft 374, while supporting a shift fork 37J. The shift unit 37H, when its shift rod 37I slides in one direction, slides the sleeve 37As of the synchro unit 37A in the one direction. Further, the shift unit 37H, when its shift rod 37I slides in another direction, slides the sleeve 37As of the synchro unit 37A in the other direction. It should be noted that the shift rod 37I is moved by a shift lever arranged inside the cabin 6.

Next, the following describes a transmission housing 7.

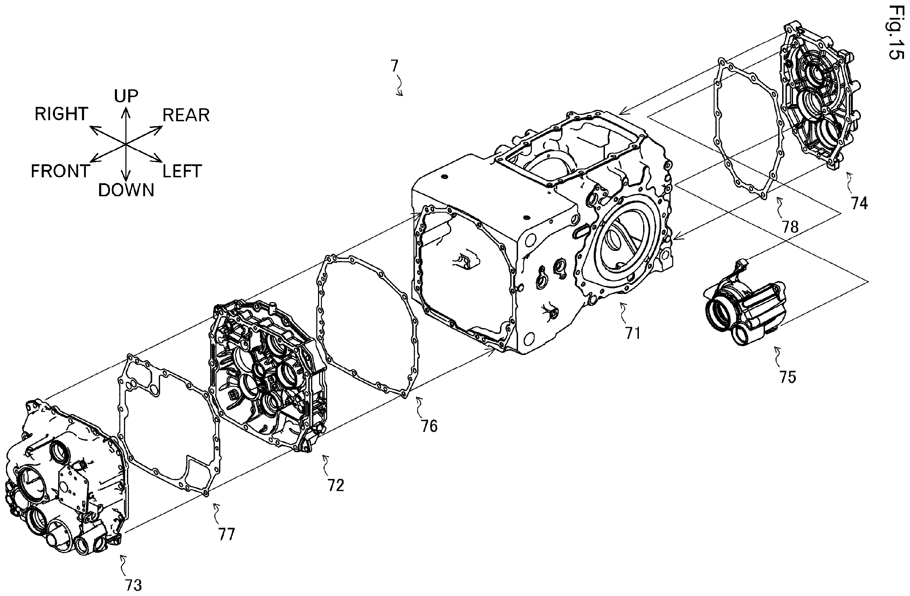

FIG. 15 is a diagram showing a structure of a transmission housing 7. In the figure, the front-rear directions, the left and right directions, as well as the up and down directions of the tractor 100 are indicated.

The transmission housing 7 is mainly constituted by a main block 71, a center block 72, a front cover 73, and a rear cover 74. It should be noted that part from the main block 71 to the front cover 73 is the same whether it is a hydraulic speed-changing specification or a mechanical speed-changing specification; however, the rear cover 74 is different between the hydraulic speed-changing specification and the mechanical speed-changing specification. Further, a unit holder 75 is only used in a mechanical speed-changing specification.

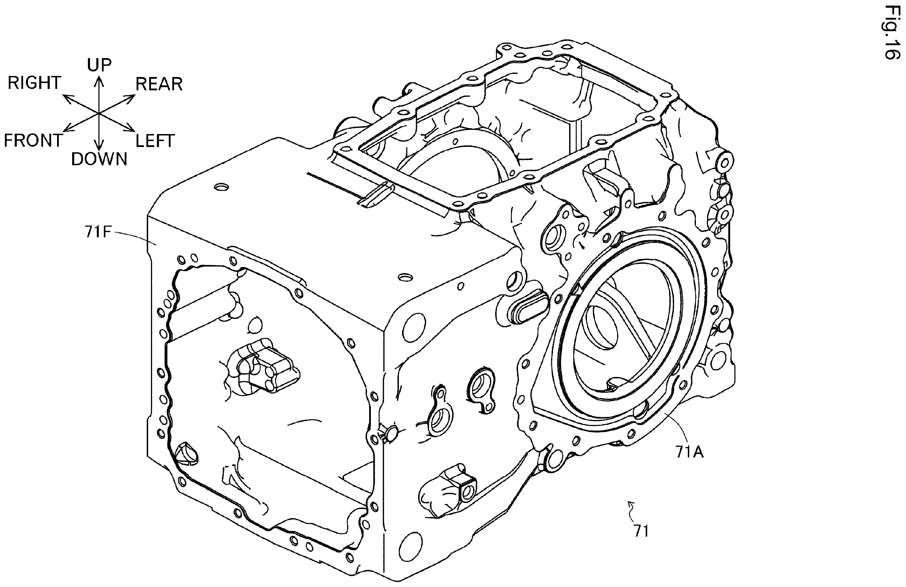

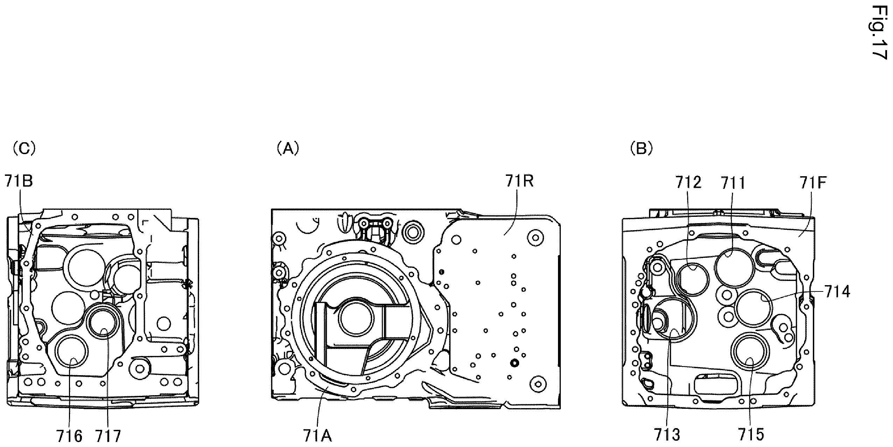

FIG. 16 shows the main block 71. In the figure, the front-rear directions, the left and right directions, as well as the up and down directions of the tractor 100 are indicated. FIG. 17 is a projection view showing the details of the main block 71. FIG. 17 (A) is a right side view of the main block 71, and FIG. 17(B) is a front side view of the main block 71. Further, FIG. 17(C) is a rear side view of the main block 71.

The main block 71 is a main structural body of the transmission housing 7. The main block 71 is a casting made of gray cast iron (e.g., FC250). On the front surface of the main block 71, an attachment seating surface 71F for the center block 72 is formed. Inside the main block 71, a plurality of bearing holes are provided. Specifically, there are provided: a bearing hole 711 for the output shaft 313 or the gear shaft 374; a bearing hole 712 for the center shaft 325, 387; a bearing hole 713 for center shaft 337, 397; a bearing hole 714 for the center shaft 353, and a bearing hole 715 for the center shaft 369. Further, on the rear surface of the main block 71, an attachment seating surface 71B for the rear cover 74 is formed. Inside the main block 71, a plurality of bearing holes are provided. Specifically, there are provided a bearing hole 716 for the drive shaft 36A and a bearing hole 717 for the PTO shaft 36D. It should be noted that, on the right side surface of the main block 71, an attachment seating surface 71R for a first electromagnetic valve or a second electromagnetic valve is formed. Further, an attachment seating surface 71A for the rear axle 5 is also formed.

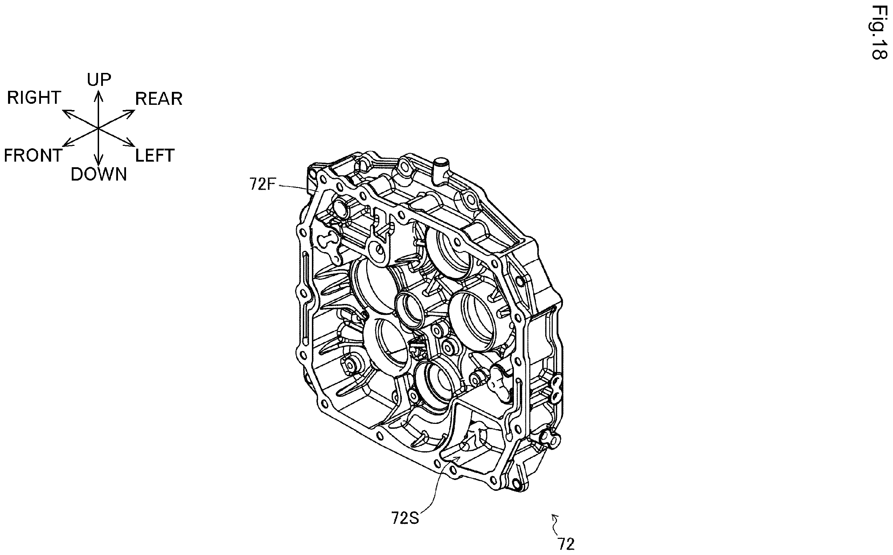

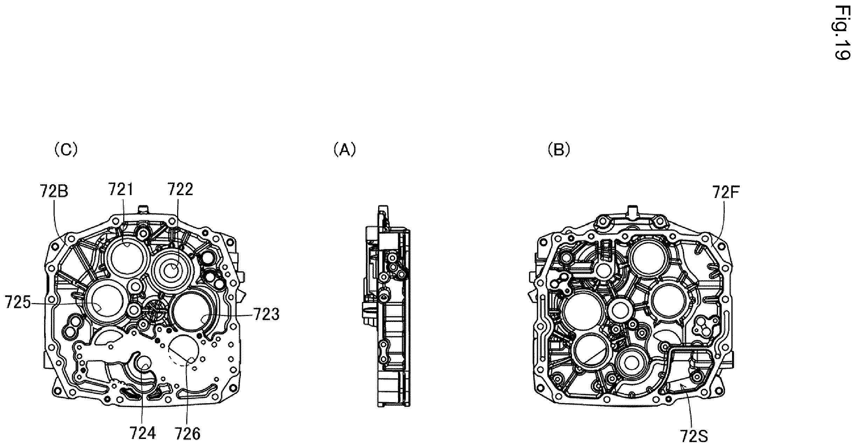

FIG. 18 shows the center block 72. In the figure, the front-rear directions, the left and right directions, as well as the up and down directions of the tractor 100 are indicated. FIG. 19 is a projection view showing the details of the center block 72. FIG. 19 (A) is a right side view of the center block 72, and FIG. 19(B) is a front side view of the center block 72. Further, FIG. 19(C) is a rear side view of the center block 72.

The center block 72 is fixed to the front end surface of the main block 71. The center block 72 is a casting made of an aluminum alloy (e.g., ADC12). On the front surface of the center block 72, an attachment seating surface 72F for the front cover 73 is formed. The center block 72 has a space 72S which is formed on the attachment seating surface 72F. Specifically, there is formed a part of a gallery serving as a passage for a working fluid to be fed to a filter 91 (see FIG. 3, FIG. 9). On the rear surface of the center block 72, an attachment seating surface 72B for the main block 71 is formed. Inside the center block 72, a plurality of bearing holes are provided. Specifically, there are provided: a bearing hole 721 for the output shaft 313 or the gear shaft 374; a bearing hole 722 for the center shaft 325, 387; a bearing hole 723 for center shaft 337, 397; a bearing hole 724 for the center shaft 345; a bearing hole 725 for the center shaft 353; and a bearing hole 726 for the countershaft 33D, 39E. It should be noted that, the center block 72 is fixed to the main block 71 via a gasket 76 (see FIG. 15). The gasket 76 has holes through which bolts go through and holes for letting pass a working fluid.

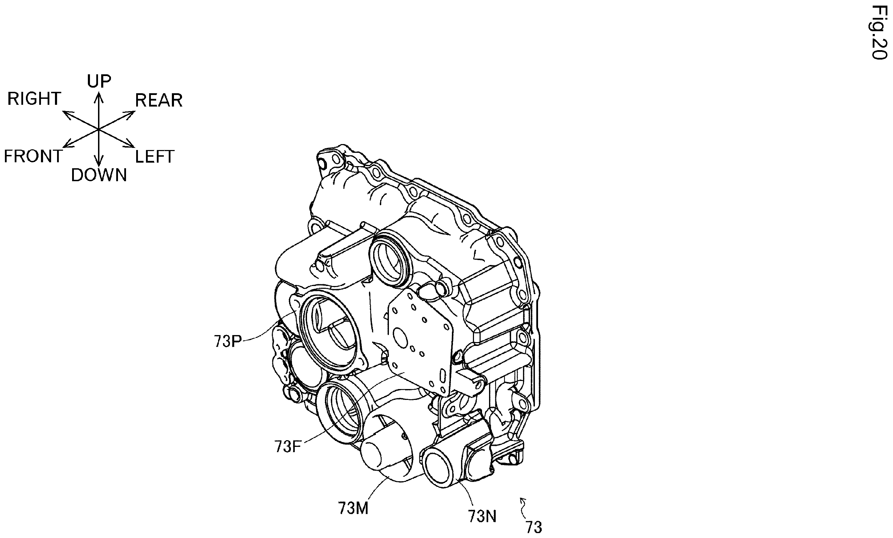

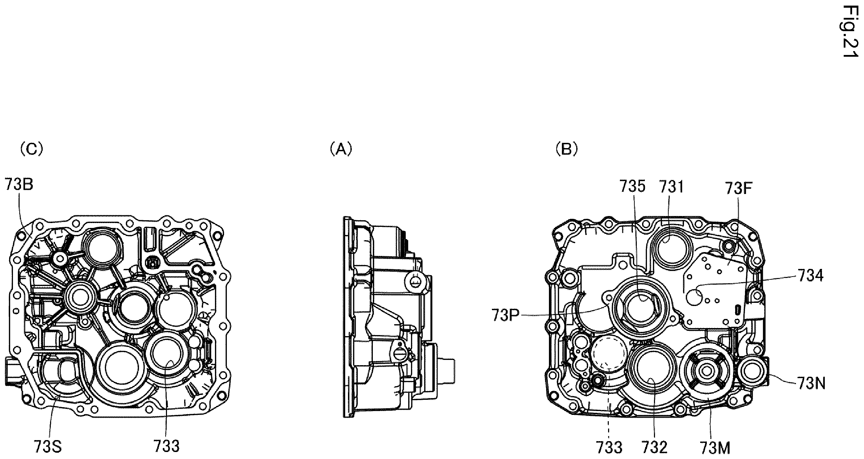

FIG. 20 shows the front cover 73. In the figure, the front-rear directions, the left and right directions, as well as the up and down directions of the tractor 100 are indicated. Further, FIG. 21 is a projection view showing the details of the front cover 73. FIG. 21(A) is a right side view of the front cover 73, and FIG. 21(B) is a front side view of the front cover 73. Further, FIG. 21(C) is a rear side view of the front cover 73.

The front cover 73 is fixed to the front end surface of the center block 72. The front cover 73 is a casting made of an aluminum alloy (e.g., ADC12). On the front surface of the front cover 73, an attachment seating surface 73F for a third electromagnetic valve 83 (see FIG. 3, FIG. 9) is formed. Further, on the front surface of the front cover 73, an attachment seating surface 73P for a hydraulic pump (not shown) is formed. The front cover 73 has a plurality of bearing holes around the attachment seating surface 73F and the attachment seating surface 73P. Specifically, there are provided: a bearing hole 731 for the input shaft 312, 372; a bearing hole 732 for the center shaft 345; a bearing hole 733 (not penetrated) for countershaft 33D, 39E; a bearing hole 734 for the center shaft 353, and a bearing hole 735 for a pump gear shaft 359 (see FIG. 2, FIG. 8). Further, there are provided an attachment seating 73M for the filter 91 and an attachment bearing 73N for a return pipe 92 (see FIG. 3, FIG. 9). On the rear surface of the front cover 73, an attachment seating surface 73B for the center block 72 is formed. The front cover 73 has a space 73S which is formed on the attachment seating surface 73B. Specifically, there is formed a part of a gallery serving as a passage for a working fluid to be fed to a filter 91. It should be noted that, the front cover 73 is fixed to the center block 72 via a gasket 77 (see FIG. 15). The gasket 77 has holes through which bolts go through and holes for letting pass a working fluid.

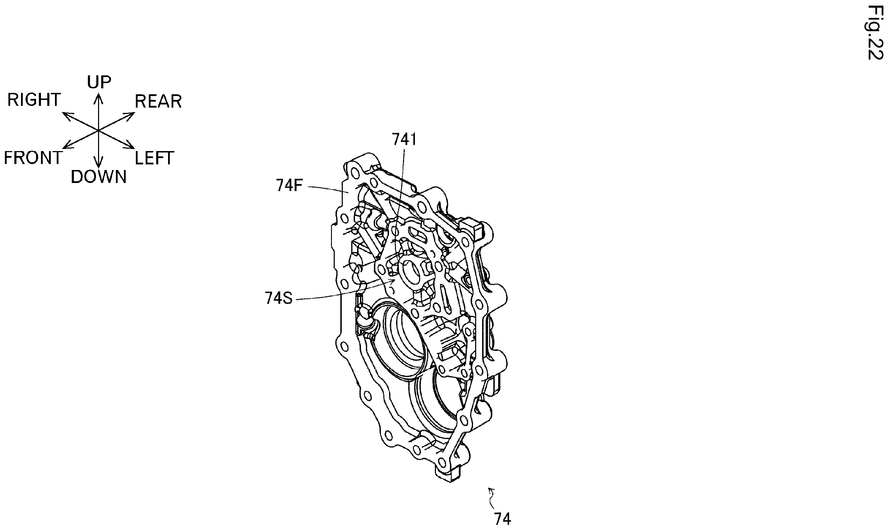

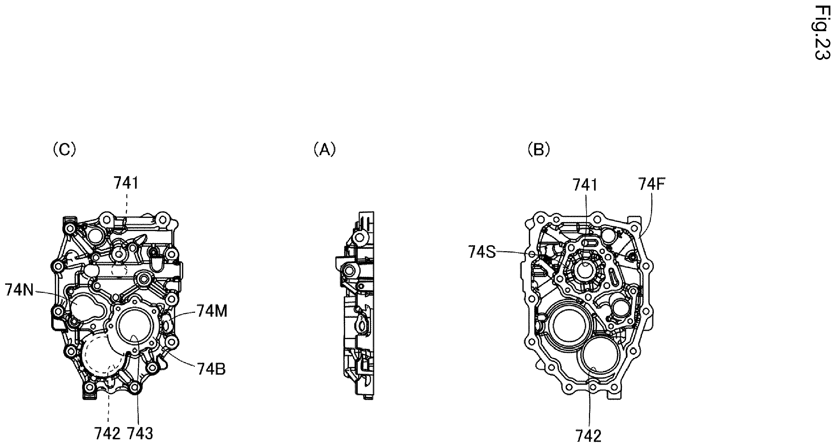

FIG.22 is a diagram showing the rear cover 74 of the hydraulic speed-changing specification. In the figure, the front-rear directions, the left and right directions, as well as the up and down directions of the tractor 100 are indicated. FIG.23 is a projection view showing the details of the rear cover 74 of the hydraulic speed-changing specification. FIG. 23 (A) is a right side view of the rear cover 74, and FIG. 23(B) is a front side view of the rear cover 74. Further, FIG. 23(C) is a rear side view of the rear cover 74.

The rear cover 74 is fixed to the rear end surface of the main block 71. The rear cover 74 is a casting made of an aluminum alloy (e.g., ADC12). On the front surface of the rear cover 74, an attachment seating surface 74F for the main block 71 is formed. Inside the rear cover 74, a space 74S is formed. Specifically, there is formed a part of a gallery serving as a passage for a working fluid to be fed to the main speed changer 31. Further, on the rear surface of the rear cover 74, an attachment seating surface 74B for a PTO shaft case is formed. Further, the rear cover 74 has a plurality of bearing holes around the attachment seating surface 74B. Specifically, there are provided a bearing hole 741 (not penetrated) for the input shaft 312; a bearing hole 742 (not penetrated) for the drive shaft 36A; and a bearing hole 743 for the PTO shaft 36D. Further, there are provided an attachment seating 74M for various sensors (not shown) and an accommodation chamber 74N for an electric actuator (not shown). It should be noted that the rear cover 74 is fixed to the main block 71 via a gasket 78 (see FIG. 15). The gasket 78 has holes through which bolts go through.

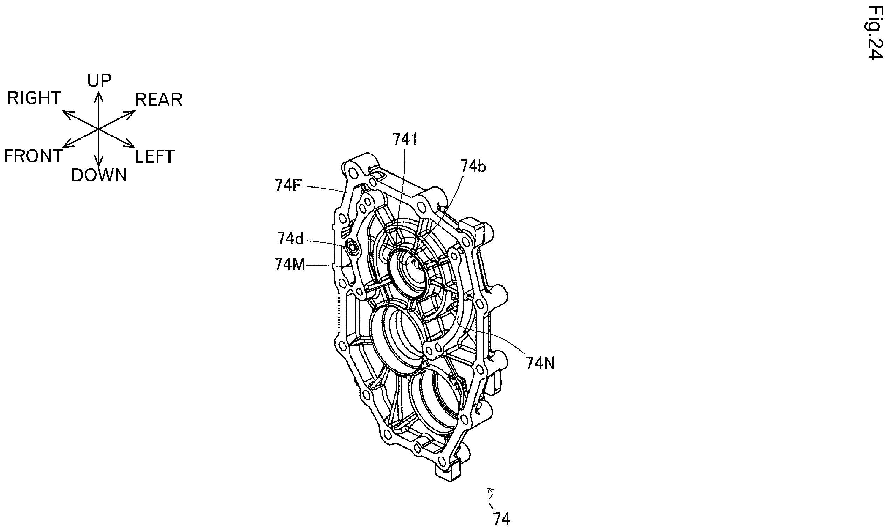

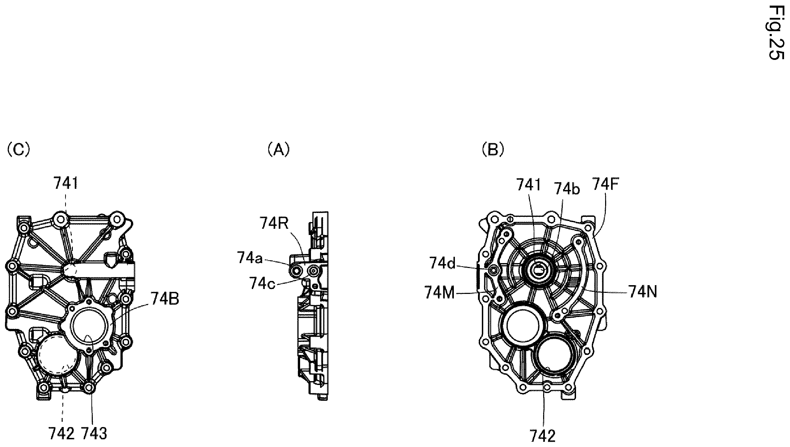

FIG. 24 is a diagram showing the rear cover 74 of the mechanical speed-changing specification. In the figure, the front-rear directions, the left and right directions, as well as the up and down directions of the tractor 100 are indicated. FIG.25 is a projection view showing the details of the rear cover 74 of the mechanical speed-changing specification. FIG. 25 (A) is a right side view of the rear cover 74, and FIG. 25(B) is a front side view of the rear cover 74. Further, FIG. 25(C) is a rear side view of the rear cover 74.

The rear cover 74 is fixed to the rear end surface of the main block 71. The rear cover 74 is a casting made of an aluminum alloy (e.g., ADC12). On the front surface of the rear cover 74, an attachment seating surface 74F for the main block 71 is formed. Inside the rear cover 74, an attachment seating surfaces 74M, 74N for the unit holder 75 (see FIG. 15) are formed. Further, on the rear surface of the rear cover 74, an attachment seating surface 74B for a PTO shaft case is formed. Further, the rear cover 74 has a plurality of bearing holes around the attachment seating surface 74B. Specifically, there are provided a bearing hole 741 (not penetrated) for the input shaft 372; a bearing hole 742 (not penetrated) for the drive shaft 36A; and a bearing hole 743 for the PTO shaft 36D. Further, on the right side surface of the rear cover 74, an attachment seating surface 74R for a first working fluid pipe (not shown) or a second working fluid pipe (not shown) is formed. It should be noted that the rear cover 74 is fixed to the main block 71 via a gasket 78 (see FIG. 15). The gasket 78 has holes through which bolts go through.

As described, the transmission 3 herein is capable of selecting any of a continuously variable transmission 311 and a connection/disconnection device 371 as the hydraulic unit. This way, the transmission 3 can be changed into various specifications, while ensuring the compatibility of the housing (transmission housing 7).

Further, when the hydraulic unit is the continuously variable transmission 311, the housing (transmission housing 7) is capable of accommodating the advancing/backing-switching device 32 and the sub-speed changer 33 which are movable via the continuously variable transmission 311. This way, the transmission 3 can achieve a hydraulic speed-changing specification, while ensuring the compatibility of the housing (transmission housing 7).

Further, when the hydraulic unit is the connection/disconnection device 371, the housing (transmission housing 7) is capable of accommodating the main speed changer 38 and the sub-speed changer 39 which moves via the connection/disconnection device 371. This way, the transmission 3 can achieve a mechanical speed-changing specification, while ensuring the compatibility of the housing (transmission housing 7).

Additionally, the main block 71, the center block 72, and the front cover 73 of the housing (transmission housing 7) are the same in a case where the hydraulic unit is the continuously variable transmission 311 and in a case where the hydraulic unit is the connection/disconnection device 371. Thus, the transmission 3 can achieve cost reduction, whether it is the hydraulic speed-changing specification or the mechanical speed-changing specification.

To the transmission housing 7, the unit holder 75 is attached. The unit holder 75 is described below.

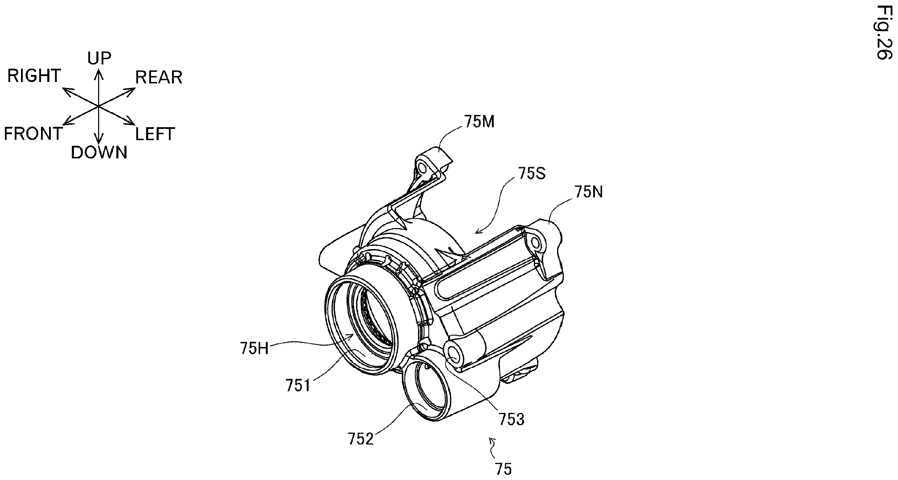

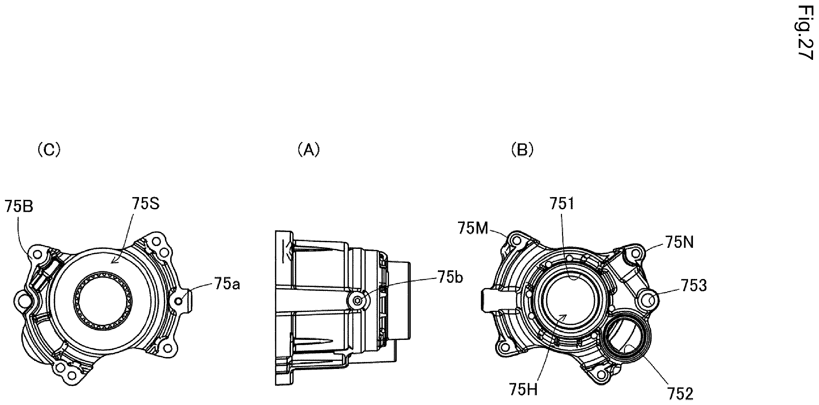

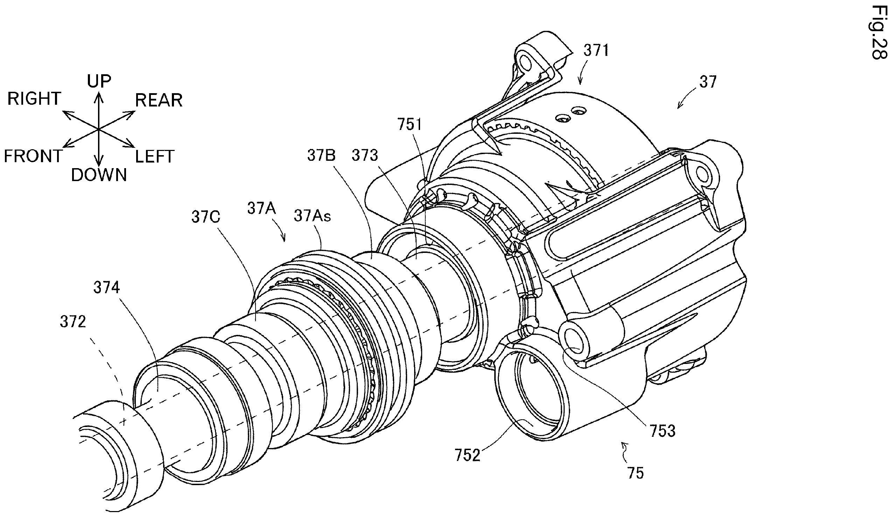

FIG. 26 shows the unit holder 75. In the figure, the front-rear directions, the left and right directions, as well as the up and down directions of the tractor 100 are indicated. Further, FIG. 27 is a projection view showing the details of the unit holder 75. FIG. 27(A) is a right side view of the unit holder 75, and FIG. 27(B) is a front side view of the unit holder 75. Further, FIG. 27(C) is a rear side view of the unit holder 75. Further, FIG. 28 shows a state where the unit holder 75 holds the main clutch 371.

The unit holder 75 is fixed to the front surface of the rear cover 74. The unit holder 75 is a casting made of an aluminum alloy (e.g., ADC12). The unit holder 75 has stays 75M, 75N towards the rear, and an attachment seating surface 75B for the rear cover 74 is formed on the rear surface. The unit holder 75 has a space 75S which is surrounded by the stays 75M, 75N. Specifically, there is formed a space for accommodating a part of the main clutch 371 (clutch mechanism). Further, the unit holder 75 has a holder hole 75H for holding a part of the main clutch 371 (brake mechanism). The unit holder 75 has a bearing hole 751 coaxially with the holder hole 75H. Specifically, the bearing hole 751 for the output shaft 373 is provided. It should be noted that the input shaft 372 and the output shaft 373 have a double-shaft structure. In other words, the input shaft 372 and the output shaft 373 are such that the input shaft 372 is inserted into the output shaft 373 which is a hollow member. Therefore, the unit holder 75 is provided only with the bearing hole 751 for the output shaft 373, without providing a bearing hole for the input shaft 372.

As described, in the transmission 3, the input shaft 372 and the output shaft 373 have a double shaft structure. Further, there is provided the unit holder 75 which is fixed to the housing (transmission housing 7) while holding the hydraulic unit (main clutch 371). Further, the unit holder 75 is provided with a bearing for either the input shaft 372 or the output shaft 373 (In the present embodiment, the bearing hole 751 for the output shaft 373). This way, in the transmission 3, vibration of the hydraulic unit (main clutch 371) can be restrained, because the unit holder 75 holds the hydraulic unit (main clutch 371). Further, in the transmission 3, the input shaft 372, the output shaft 373, and the unit holder 75 are made compact, which enables downsizing of the housing (transmission housing 7).

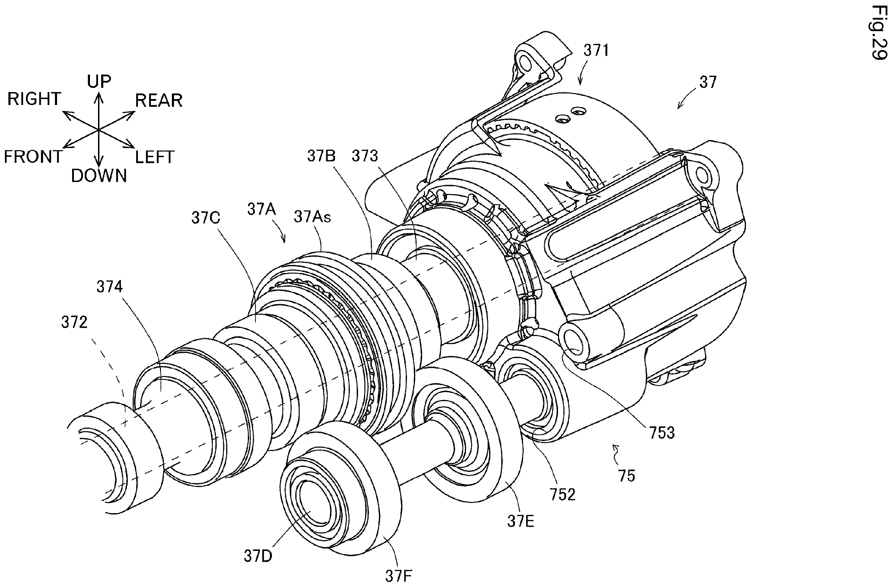

Further, the unit holder 75 of the present embodiment is additionally provided with another bearing hole. Specifically, there is provided a bearing hole 752 for the countershaft 37D constituting the advancing/backing-switching mechanism 3R. Therefore, the unit holder 75 can rotatably support the countershaft 37D (see FIG. 29).

As described, the transmission 3 includes the advancing/backing-switching mechanism 3R. Further, the unit holder 75 is provided with a bearing for the countershaft 37D (In the present embodiment, the bearing hole 752 for the countershaft 37D) constituting the advancing/backing-switching mechanism 3R. This way, in the transmission 3, the unit holder 75 and the countershaft 37D are made compact, which enables downsizing of the housing (transmission housing 7).

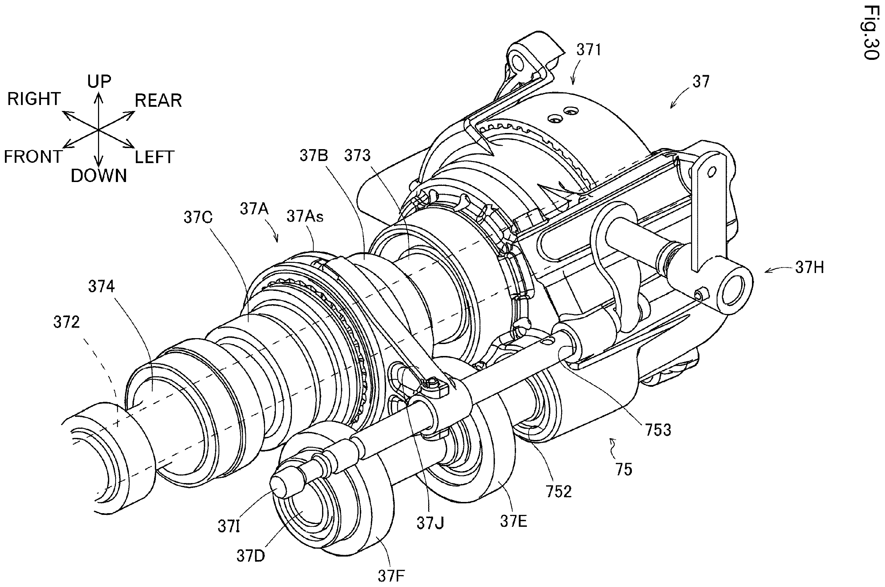

Further, the unit holder 75 of the present embodiment is additionally provided with a thrust hole. Specifically, there is provided a thrust hole 753 for the control rod 37I constituting the advancing/backing-switching mechanism 3R. Therefore, the unit holder 75 can slideably support the control rod 37I (see FIG 30).

As described, the transmission 3 includes the advancing/backing-switching mechanism 3R. Further, the unit holder 75 is provided with a bearing for the control rod 37I (In the present embodiment, the thrust hole 753 for the control rod 371) which constitutes the advancing/backing-switching mechanism 3R. This way, in the transmission 3, the unit holder 75 and the control rod 37I are made compact, which enables downsizing of the housing (transmission housing 7).

Next, the following describes a passage for guiding a working fluid to the clutch mechanism of the main clutch 371.

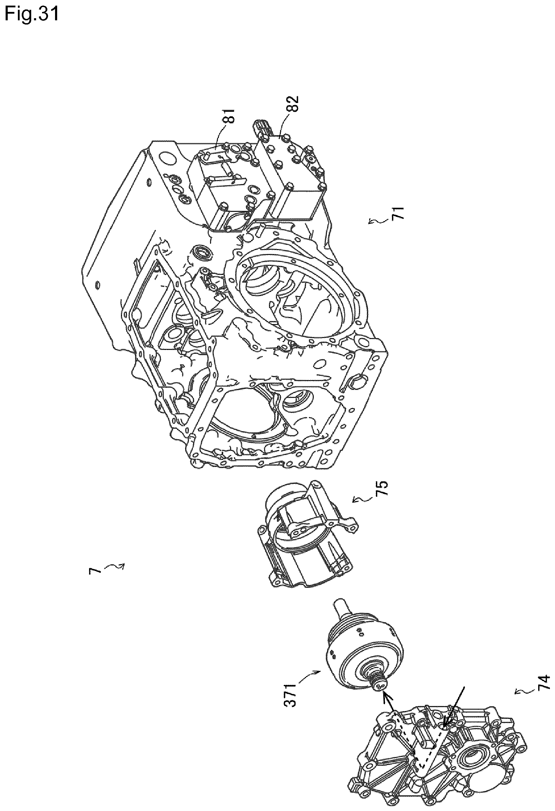

FIG. 31 is a diagram showing a passage guiding a working fluid to a clutch mechanism of the main clutch 371. It should be noted that the arrow in the figure indicates the direction in which the working fluid flows.

As shown in FIG. 24 and FIG. 25, in the rear cover 74, an oil hole 74a is provided from the attachment seating surface 74R towards the left, and an oil hole 74b is provided, in such a manner as to connect to the oil hole 74a, from the bottom of the bearing hole 741 towards the rear. The oil hole 74a is connected to the first working fluid pipe (not shown) extended from the first electromagnetic valve 81.

With such a structure, when the operator operates to "advance" or "back", the working fluid passes the oil hole 74a and the oil hole 74b of the rear cover 74, and is guided to an oil hole (not shown) of the input shaft 372. Then, the working fluid passes inside the input shaft 372 and operates the main clutch 371. Specifically, the working fluid operates the clutch mechanism of the main clutch 371.

Next, the following describes a passage for guiding a working fluid to the brake mechanism of the main clutch 371.

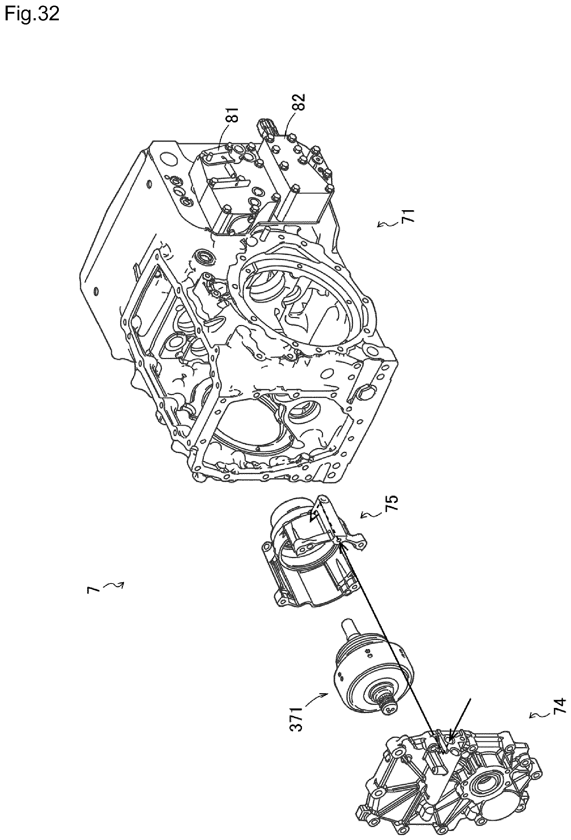

FIG. 32 is a diagram showing a passage guiding a working fluid to a brake mechanism of the main clutch 371. It should be noted that the arrow in the figure indicates the direction in which the working fluid flows.

As shown in FIG. 24 and FIG. 25, in the rear cover 74, an oil hole 74c is provided from the attachment seating surface 74R towards the left, and an oil hole 74d is provided, in such a manner as to connect to the oil hole 74c, from the attachment seating surface 74M towards the rear. The oil hole 74c is connected to the second working fluid pipe (not shown) extended from the first electromagnetic valve 81.

Further, as shown in FIG. 26 and FIG. 27, in the unit holder 75, an oil hole 75a is provided from the attachment seating surface 75B towards the front, and an oil hole 75b is provided, in such a manner as to connect to the oil hole 75a, from the right side towards the left. The oil hole 75b is connected to the circumferential surface of the holder hole 75H, and its base end is closed by a plug.

With such a structure, when the operator operates to "advance" or "back", the working fluid passes the oil hole 74c and the oil hole 74d of the rear cover 74, and is guided to the unit holder 75. After that, the working fluid is guided to the inside of the holder hole 75H via the oil hole 75a and the oil hole 75b of the unit holder 75. Then, the working fluid pressurized inside the holder hole 75H and operates the main clutch 371. Specifically, the working fluid operates (release) the brake mechanism of the main clutch 371.

As described, in the transmission 3, the holes (oil holes 75a, 75b) provided to the unit holder 75 serve as a passage for guiding the working fluid to the hydraulic unit (brake mechanism of the main clutch 371). This way, in the transmission 3, the internal structure with a reduced number of its components is made compact, which enables downsizing of the housing (transmission housing 7).

### Industrial Applicability

The present invention is applicable to the technology of transmissions.

### Reference Signs List

- 100: tractor
- 3: transmission
- 31: main speed changer
- 311: continuously variable transmission (hydraulic unit)
- 32: advancing/backing-switching device
- 33: sub-speed changer
- 34: front-wheel drive switching device
- 35: work-machine drive switching device
- 36: work-machine speed changer
- 37: power transmission switching device
- 371: connection/disconnection device (hydraulic unit)
- 372: input shaft
- 373: output shaft
- 374: gear shaft
- 3R: advancing/backing-switching mechanism
- 37A: synchro unit
- 37D: countershaft
- 37I: control rod
- 38: main speed changer
- 39: sub-speed changer
- 7: transmission housing (housing)
- 71: main block
- 72: center block
- 73: front cover
- 74: rear cover
- 75: unit holder
- 75a: oil hole (hole)
- 75b: oil hole (hole)

## Claims

1. A transmission comprising:
a hydraulic unit (311, 371) which operates with a working fluid;
an input shaft (372) configured to transmit rotary power to the hydraulic unit;
an output shaft (373) configured to transmit rotary power from the hydraulic unit (311, 371); and
a housing (7) configured to accommodate the hydraulic unit (311, 371), the input shaft (372) and the output shaft (373), **characterised in that**
the transmission is capable of selecting a continuously variable transmission (311) or a connection/disconnection device (371) as the hydraulic unit, wherein the input shaft (372) and the output shaft (373) are structured into a double-shaft structure,
a unit holder (75) fixed to the housing (7) while holding the hydraulic unit is provided, and
to the unit holder, (75) a bearing for the input shaft (372) or the output shaft (373) is provided.

2. The transmission according to claim 1, wherein
when the hydraulic unit is the continuously variable transmission (311), the housing (7) is capable of accommodating an advancing/backing-switching device and a sub-speed changer which are moveable through the continuously variable transmission.

3. The transmission according to claim 1, wherein
when the hydraulic unit is the connection/disconnection device, (371) the housing (7) is capable of accommodating a main speed changer and a sub-speed changer which are moveable through the connection/disconnection device.

4. The transmission according to claim 2 or 3, wherein
the housing (7) has a main block, a center block, and a front cover which are common for a case where the hydraulic unit is the continuously variable transmission (311) and for a case where the hydraulic unit is the connection/disconnection device. (371)

5. The transmission according to claim 1, comprising
an advancing/backing-switching mechanism, wherein
to the unit holder (75), a bearing for a countershaft constituting the advancing/backing-switching mechanism is provided.

6. The transmission according to claim 1, comprising
an advancing/backing-switching mechanism, wherein
to the unit holder (75), a bearing for a control rod constituting the advancing/backing-switching mechanism is provided.

7. The transmission according to any one of claims 1 and 5 and 6, wherein
a hole (75a, 75b) provided to the unit holder (75) serves as a passage for guiding a working fluid to the hydraulic unit.

## Patentansprüche

1. Getriebe, aufweisend:
eine Hydraulikeinheit (311, 371), die mit einem Arbeitsfluid arbeitet;
eine Eingangswelle (372), die eingerichtet ist, eine Drehkraft an die Hydraulikeinheit zu vermitteln;
eine Ausgangswelle (373), der eingerichtet ist, Drehkraft von der Hydraulikeinheit (311, 371) zu übertragen; und
ein Gehäuse (7), das eingerichtet ist, die Hydraulikeinheit (311, 371), die Eingangswelle (372), und die Ausgangswelle (373) aufzunehmen, **dadurch gekennzeichnet, dass** das Getriebe in der Lage ist, ein stufenloses Getriebe (311) oder eine Verbindungs-/Trennungsvorrichtung (371) als Hydraulikeinheit (373) auszuwählen, wobei die Eingangswelle (372) und die Ausgangswelle (373) in Doppelwellenstruktur ausgelegt sind,
einen Aggregathalter (75), der an dem Gehäuse (7) befestigt ist und dabei die Hydraulikeinheit hält, bereitgestellt ist, und
an dem Aggregathalter (75) ein Lager für die Eingangswelle (372) oder die Ausgangswelle (373) bereitgestellt ist.

2. Getriebe nach Anspruch 1, wobei
wenn die Hydraulikeinheit das stufenlose Getriebe ist (311) ist, das Gehäuse in der Lage ist, eine Vor-/Zurück-Umschaltvorrichtung und eine Teilgangwechseleinrichtung aufzunehmen, welche durch das stufenlose Getriebe bewegbar sind.

3. Getriebe nach Anspruch 1, wobei
wenn die Hydraulikeinheit die Verbindungs-/Trennungsvorrichtung (371) ist, das Gehäuse (7) in der Lage ist, einen Hauptgangwechsel und eine Teilgangwechseleinrichtung aufzunehmen, die durch die Verbindungs-/Trennungsvorrichtung bewegbar sind.

4. Getriebe nach Anspruch 2 oder 3, wobei
das Gehäuse (7) einen Hauptblock, einen Mittelblock, und eine Frontabdeckung aufweist, die zusammen sind für einen Fall, bei dem die Hydraulikeinheit das stufenlos variable Getriebe (311) ist und für den Fall, bei dem die Hydraulikeinheit die Verbindungs-/Trennungsvorrichtung (371) ist.

5. Getriebe nach Anspruch 1, aufweisend:
einen Vor/Zurück-Umschaltmechanismus, wobei
an dem Aggregathalter (75) ein Lager für eine Gegenwelle bereitgestellt ist, welche den Vor-/Zurück-Umschaltmechanismus darstellt.

6. Getriebe nach Anspruch 1, aufweisend
einen Vor-/Zurück-Umschaltmechanismus, wobei
an dem Aggregathalter (75) ein Lager für eine Steuerstange bereitgestellt ist, welche den Vor-/Zurück-Umschaltmechanismus darstellt.

7. Getriebe nach einem der Ansprüche 1 und 5 und 6, wobei
eine Öffnung (75a, 75b), die an dem Aggregathalter (75) bereitgestellt ist, als Passage zum Leiten eines Arbeitsfluids zu dem Hydraulikaggregat dient.

## Revendications

1. Boîte de vitesses comprenant :
une unité hydraulique (311, 371) qui fonctionne avec un fluide de travail ;
un arbre d'entrée (372) configuré pour transmettre une puissance rotative à l'unité hydraulique ;
un arbre de sortie (373) configuré pour transmettre une puissance rotative à partir de l'unité hydraulique (311, 371) ; et
un boîtier (7) configuré pour recevoir l'unité hydraulique (311, 371), l'arbre d'entrée (372) et l'arbre de sortie (373), **caractérisée en ce que** la boîte de vitesses est capable de sélectionner une transmission à variation continue (311) ou un dispositif de solidarisation/désolidarisation (371) comme unité hydraulique, dans laquelle l'arbre d'entrée (372) et l'arbre de sortie (373) sont structurés sous la forme d'une structure à arbre double,
un porte-unité (75) fixé au boîtier (7) tout en maintenant l'unité hydraulique est fourni, et
un palier pour l'arbre d'entrée (372) ou l'arbre de sortie (373) est fourni au porte-unité (75).

2. Boîte de vitesses selon la revendication 1, dans laquelle
lorsque l'unité hydraulique est la transmission à variation continue (311), le boîtier (7) est capable de recevoir un dispositif de commutation d'avance/de recul et un dispositif de changement de vitesses secondaire qui sont mobiles par le biais de la transmission à variation continue.

3. Boîte de vitesses selon la revendication 1, dans laquelle
lorsque l'unité hydraulique est le dispositif de solidarisation/désolidarisation (371), le boîtier (7) est capable de recevoir un dispositif de changement de vitesses principal et un dispositif de changement de vitesses secondaire qui sont mobiles par le biais du dispositif de solidarisation/désolidarisation.

4. Boîte de vitesses selon la revendication 2 ou 3, dans laquelle
le boîtier (7) présente un bloc principal, un bloc central et un couvercle avant qui sont communs dans un cas où l'unité hydraulique est la transmission à variation continue (311) et dans un cas où l'unité hydraulique est le dispositif de solidarisation/désolidarisation (371).

5. Boîte de vitesses selon la revendication 1, comprenant
un mécanisme de commutation d'avance/de recul, dans laquelle
un palier pour un arbre intermédiaire constituant le mécanisme de commutation d'avance/de recul est fourni au porte-unité (75).

6. Boîte de vitesses selon la revendication 1, comprenant
un mécanisme de commutation d'avance/de recul, dans lequel
un palier pour une tige de commande constituant le mécanisme de commutation d'avance/de recul est fourni au porte-unité (75).

7. Boîte de vitesses selon l'une quelconque des revendications 1 et 5 et 6, dans laquelle
un trou (75a, 75b) fourni au porte-unité (75) sert de passage pour guider un fluide de travail vers l'unité hydraulique.
